(19) Europäisches Patentamt
European Patent Office
Office européen des brevets

(11) EP 0 519 681 B1

(12) **EUROPEAN PATENT SPECIFICATION**

(45) Date of publication and mention
of the grant of the patent:
**16.10.1996 Bulletin 1996/42**

(51) Int Cl.6: **H01M 8/12, H01M 4/88**

(21) Application number: **92305504.0**

(22) Date of filing: **16.06.1992**

(54) **Method for preparing anode for solid oxide fuel cells**

Verfahren zur Herstellung einer Anode für Festoxid-Brennstoffzellen

Méthode de préparation d'une anode pour piles à combustible à oxides solides

(84) Designated Contracting States:
**CH DE DK ES FR GB IT LI NL SE**

(30) Priority: **20.06.1991 JP 176235/91**
**01.11.1991 JP 313543/91**

(43) Date of publication of application:
**23.12.1992 Bulletin 1992/52**

(73) Proprietor: **TOKYO GAS CO., LTD.**
**Minato-ku Tokyo 105 (JP)**

(72) Inventor: **Matsuzaki, Yoshio**
**Tokyo (JP)**

(74) Representative: **Jones, Stephen Anthony et al**
**E. N. Lewis & Taylor**
**144 New Walk**
**Leicester LE1 7JA (GB)**

(56) References cited:
**EP-A- 0 478 185       DE-A- 2 806 408**
**DE-A- 3 942 384**

- **DATABASE WPI Section Ch, Week 8223,**
**Derwent Publications Ltd., London, GB; Class**
**L03, AN 82-47136E & JP-A-57071115**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

## BACKGROUND OF THE INVENTION

### 1. Field of the Invention

The present invention relates to a method of manufacturing an anode for a solid oxide fuel cell.

### 2. Description of the Prior Art

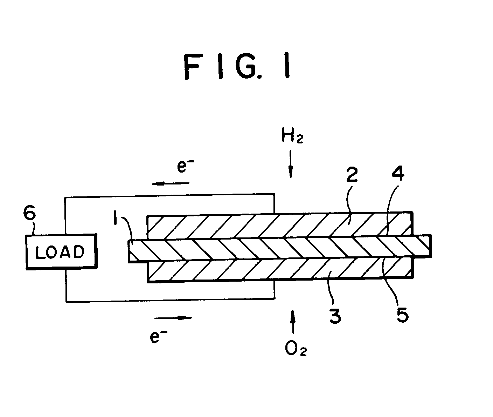

Recently, considerable attention has been focused on the fuel cell as an energy source, not only from the viewpoint of conservation of resources, but also that of the effect on the environment. The solid electrolyte type of fuel cell in principle has a high electric generating efficiency because of the high operating temperatures of 800° to 1000°C in the fuel cell, and because the materials of construction are all solid it has the advantage of ease in handling, so that progress is being made in the practical application of this device. FIG.1 shows a rough outline of the structure of a solid electrolyte fuel cell wherein the center is a solid electrolyte 1, on one surface of which a fuel electrode 2 (hereinafter referred to as "anode"), and on the other surface an air electrode 3 (hereinafter referred to as "cathode") are formed. The anode 2 and the cathode 3 form a pair of interfaces 4 and 5 respectively with the solid electrolyte, and are connected by an external circuit through a load 6. When a fuel gas such as hydrogen ($H_2$), methane ($CH_4$), or the like is supplied to the anode 2, and an oxidizing agent such as air, oxygen ($O_2$), or the like is supplied to the cathode 3, an electromotive force is produced between the anode 2 and the cathode 3, and a current flows through the load 6 connected to the external circuit. The following types of reactions occur at the interfaces 4 and 5 of the anode 2 and the cathode 3 respectively.

$$\text{Interface 4}: O^{2-} + H_2 \rightarrow H_2O = 2e -$$

$$\text{Interface 5}: O_2 + 2e- \rightarrow O^{2-}$$

In this type of solid oxide fuel cell it is known that the microstructure of the electrodes has a major influence on the cell performance. The effect of the microstructure of the anode 2 is particularly great. Normally a cermet is used for the anode 2, and the technology for obtaining the optimum microstructure is extremely important.

A method for preparing the anode 2 is commonly known wherein generally an Ni-YSZ (yttria stabilized zirconia) cermet or the like, Ni particles or NiO particles, and YSZ particles are mechanically blended, coated onto an electrolyte layer, and annealed. Problems occur with this technology because the Ni particles or NiO particles and YSZ particles are mechanically blended so that the dispersion of the Ni particles or NiO particles is poor. When the electrode is annealed or when generating electricity the Ni particles tend to cohere, with the result that the performance of the anode drops, and the adhesion of the anode to the electrolyte layer is poor. In addition, there is a tendency toward a large contact resistance and peeling of the electrode, so that the life span is shortened.

DE-A-3942384 is directed towards the production of an electrode on an YSZ electrolyte, the production comprising the steps of preparing a paste of noble metal particles and an organometallic compound, coating the electrolyte with the paste and sintering. In a preferred embodiment the organometallic compound is an alkylate.

## SUMMARY OF THE INVENTION

An object of the present invention is to provide, with due consideration to the drawbacks of such conventional electrodes, a method of preparing an anode for solid oxide fuel cells whereby the dispersion of nickel particles which form the anode for the solid oxide fuel cells is ensured, coherence of the Ni (or NiO) particles when being annealed or when generating electricity is prevented, the adhesion of the anode to the solid electrolyte layer is good, the contact resistance is reduced, and the electrode performance is improved.

This object is achieved in the present invention by the provision of a thermal decomposition method for an organometallic compound, which is an oxide film-forming process. Specifically, in order to form a fuel electrode on one surface of the central solid electrolyte layer, first a metal such as Ni or the like or a metallic oxide powder such as NiO or the like is blended with a solution of an organometallic compound from which is obtained a film or minute particles of a solid electrolyte by thermal decomposition. The solvent is then evaporated off until a suitable viscosity is obtained. The slurry obtained by this process is coated onto the solid electrolyte layer and this coated film is then dried, annealed, and thermally decomposed to obtain a metal-solid electrolyte complex cermet. Further, the solid electrolyte layer and the solid electrolyte grains in the electrode do not necessarily have to be made of the same elements. Also, the solid electrolyte powder may be added to the slurry.

A finely controlled microstructure in which the metal, such as Ni, or the metal oxide, such as NiO, are surrounded by thin films or fine precipitates of electrolyte causes the metal or metallic oxide particles to not cohere but be uniformly dispersed, and strengthens adhesion of the anode to the electrolyte. In addition, because of applying the thin-film forming process, which is a thermal decomposition of a metallic soap, to a fabrication of YSZ composition adjacent to the anode-electrolyte interface, the central solid electrolyte layer and the electrolyte grains in the anode are very strongly combined. For this reason, a microstructure is provided in which the electrolyte in the anode is grown from the surface of the central electrolyte, and the surface area of the electrolyte layer is substantially increased. By adding the solid electrolyte powder to the slurry, control of the diameter of the solid electrolyte particles is simplified, and control of the microstructures is more precise.

## BRIEF DESCRIPTION OF THE DRAWINGS

These and other objects, features, and advantages of the present invention will become more apparent from the following description of the preferred embodiments taken in conjunction with the accompanying drawings, in which:

FIG.1 shows a configuration of a single cell of a fuel cell of solid electrolyte.

FIG.2 is a microscopic photograph showing the microstructure of an anode prepared by a first embodiment of the present invention.

FIG.3 is a microscopic photograph showing the structure adjacent to the interface of an anode and the central solid electrolyte in a second embodiment of the present invention.

FIG.4 is a graph showing a comparison of the electrical output characteristics of a single cell fuel cell using the anode prepared by the method of the present invention and a single cell using an anode prepared by a conventional method.

## DETAILED DESCRIPTION OF THE PREFERRED EMBODIMENTS

The present invention will now be explained based on the following embodiments of the present invention.

In the present invention it is possible to use a solid solution possessing oxygen ion conductivity in which several percent to several tens percent of a divalent or trivalent metal oxide, such as yttrium oxide ($Y_2O_3$), calcium oxide (CaO) or the like is doped to a tetravalent metal oxide such as zirconium oxide ($ZrO_2$), as a solid electrolyte.

A fatty acid salt, such as a naphthenic acid salt, an octyl acid salt, or the like, and acetyl acetonate can be used as an organometallic compound. A solvent which can uniformly dissolve the metal compound used, such as toluene or acetyl acetone or a mixture of these solvents is used as an organic solvent.

The volume of Ni in the prepared cermet with respect to the total cermet body is in the 0.4 to 0.98 range.

Commonly known methods such as slurry coating, screen printing, and the like can be used in coating the blended slurry onto the central solid electrolyte layer.

An embodiment of an anode of the present invention using the above-mentioned material will now be explained.

[ Embodiment 1 ]

An NiO powder with an average particle diameter of 7 μm was blended with a toluene, acetyl acetone solution of zirconium octylate (($RCO_2)_4Zr$, where R = $C_7H_{15}$) and yttrium octylate (($RCO_2)_3Y$, where R = $C_7H_{15}$) (for which the composition corresponds to the stoichiometry of 8 mol% $Y_2O_3$ - 92 mol% $ZrO_2$ after thermal decomposition) to give, after thermal decomposition, a ratio of NiO : YSZ of 0.947 : 0.053 by weight. After the solvent was evaporated off to a suitable viscosity, the resulting solution was screen-printed onto a central solid electrolyte (YSZ) plate. This material was then dried at 100° to 200°C, thermally decomposed at 300° to 500°C, and annealed at 1450°C.

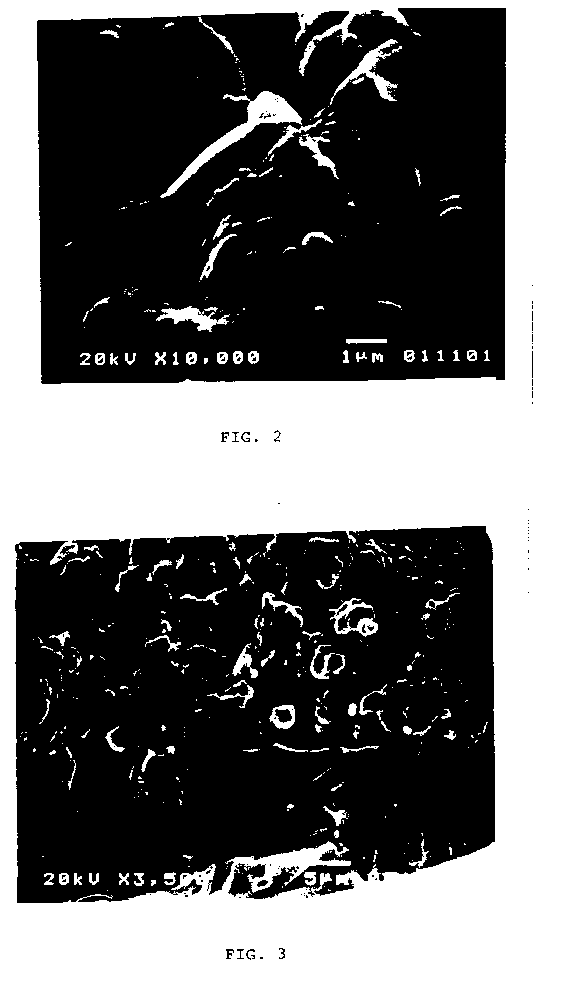

As a result, a microstructure shown in the photograph of FIG.2, in which YSZ particles of an average diameter of 1 μm or less were uniformly deposited on the surface of NiO grains and electrolyte (YSZ), was obtained. The performance of the anode was good and a reduction in polarization was observed. The power density of the single cell was also improved.

[ Embodiment 2 ]

An NiO powder with an average particle diameter of 0.9 μm was blended with the toluene, acetyl acetone solution of zirconium octylate and yttrium octylate used in the first embodiment, then processed in the same manner as in the first embodiment. As a result, as shown in the photograph of FIG.3, an anode microstructure in which the circumference of each NiO grain was covered with a YSZ film was obtained. It can be readily understood from the photograph that the bond at the interface between this anode and the solid electrode (YSZ) plate is extremely secure. Therefore, both the contact resistance and the polarization of the formed anode are small, and a wide improvement was observed in the power density of the single cells.

[ Embodiment 3 ]

An NiO powder with an average particle diameter of 0.9 μm was blended with a toluene, acetyl acetone solution of cerium (Ce) octylate and yttrium octylate (adjusted so that after thermal decomposition a composition of $CeO_2$ doped with 10 mol% of $Y_2O_3$ was obtained) to give, after thermal decomposition, a ratio of NiO : (CeO doped with $Y_2O_3$) of 0.947 : 0.053 by weight. After the solvent was evaporated off to a suitable viscosity, the resulting solution was screen-printed onto a central solid electrolyte (YSZ) plate. This material was then thermally decomposed and annealed at the same temperature profiles as in the first and second embodiments.

Even when the electrolyte in the electrode is changed from $ZrO_2$ doped with $Y_2O_3$ (first and second embodiments) to $CeO_2$ doped with $Y_2O_3$ (third embodiment), it can be understood that when this method is used an extremely good electrode is obtained. The electrode shows the same degree of performance with respect to contact resistance and polarization as in the second embodiment.

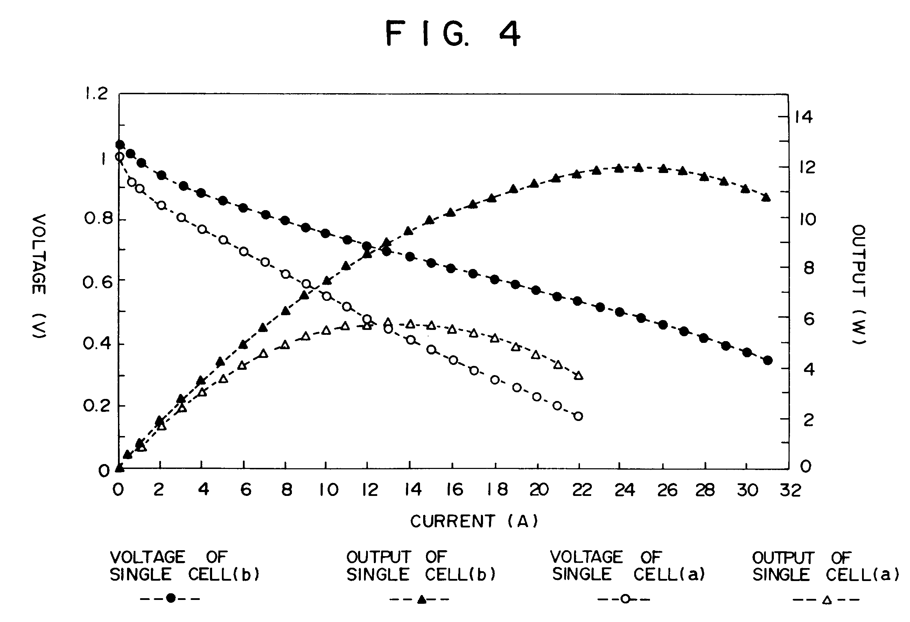

ZrO$_2$ doped with 3 mol% Y$_2$O$_3$ is used as the central solid electrolyte; LaSrMnO$_3$ (lanthanum manganite doped with strontium) is used as the cathode material, and the cermet obtained from this invention (embodiment 2) is used as the fuel electrode. Cell performance was tested for a single cell (a) for which the anode was prepared by the conventional method of simply blending the materials, and for a single cell (b) for which the anode was prepared by the method of the second embodiment, under the following conditions. The results of a comparison of output voltages and output power are given in FIG.4.

(1) Flows on fuel electrode side

| Hydrogen flow : | 1000 SCCM |
| Nitrogen flow : | 500 SCCM |

(2) Air electrode flow

| Airflow : | 2000 SCCM |

(3) Temperature          1000°C
(4) Effective electrode area : 21 cm$^2$

In comparing the two cells it is seen that the cell prepared by the method of the present invention is far superior in both voltage and power to the conventionally manufactured cell.

In the present invention, materials other than those described above which can be used as the organometallic compound are octyl acid salt, naphthenic acid salt, neodecanoic acid salt, ethylhexanoic acid salt, propionic acid salt, stearic acid salt and acetylacetonate complexes. In addition, in place of Ni or NiO particles, at least one type of metallic particle such as Co, Fe and their alloys can be used.

(1) Reduction of contact resistance between electrode and electrolyte

As a result of the present invention, an anode is obtained of a structure in which a thin-film or minute particles of an electrolyte are uniformly deposited on the surface of Ni or NiO grains and on the surface of a central solid electrolyte so that the Ni or NiO grains do not cohere but are uniformly dispersed. In addition, because the thermal decomposition of a metallic soap, which is a film-forming process, is applied to the YSZ composition, the bond between the central solid electrolyte and the electrolyte in the anode is extremely strong at a position adjacent to the interface, and is integrally formed. For this reason, the structure is such that the electrolyte in the anode grows from the surface of the central solid electrolyte and the surface area of the electrolyte layer is substantially increased. As a result, a microstructure is obtained in which the point of contact between the Ni particles and the electrolyte layer is large so that the electrode has a small contact resistance.

(2) Reduction of polarization

As described in (1), the central electrolyte and the Ni or NiO are uniformly dispersed and the electrolyte particles and electrolyte layer in the cermet are strongly bonded at the interface. Therefore the surface area of the electrolyte layer in the microstructure is increased. Specifically, an ideal electrode microstructure is obtained in which the length of the three-layer interface between the Ni adjacent to the interface and the electrolyte and the gaseous phase is very great, so that polarization from the anode is extremely small.

(3) Increase in adhesion strength between the central electrolyte and the electrode

As described in (1), because the central electrolyte and the electrolyte layer of the anode are strongly bonded, the adhesion strength between the electrolyte layer and the electrode is very great, and the Ni particles are uniformly distributed. The electrolyte thin-films or the minute particles cover the circumference of the Ni grains so that there is no cohesion between like particles of Ni, and there is little tendency for the electrode to peel. As a result, the electrode has a long life expectancy.

**Claims**

1.  A method of preparing an anode for a fuel cell of solid electrolyte comprising the steps of:

    forming a blended slurry of an organometallic compound which is one of, or a combination of, octyl acid salt, naphthenic acid salt, neodecanoic acid salt, ethylhexanoic acid salt, propionic acid salt, stearic acid salt and acetylacetonato complex of a divalent or trivalent metal and of a tetravalent metal, and a metal or metal oxide powder,
    coating the blended slurry onto the surface of a central solid electrolyte layer of said fuel cell, drying and thermally decomposing said slurry so as to form a tetravalent metal oxide doped with a divalent or trivalent metal oxide, and annealing the thus prepared anode so that films or particles of said doped metal oxide are uniformly distributed on the surface of grains of metal or metal oxide and on the surface of said central solid electrolyte layer.

2.  A method according to any preceding claim, wherein the tetravalent metal is zirconium and the divalent or trivalent metal is yttrium.

3. A method according to any one of Claims 1 to 2, wherein the tetravalent metal is cerium and the divalent or trivalent metal is yttrium.

4. A method according to any preceding claim, wherein the central solid electrolyte layer comprises yttria-stabilised zirconia.

5. A method according to any preceding claim, wherein solid electrolyte powder is added to said blended slurry prior to coating of said blended slurry onto the surface of the central solid electrolyte layer.

6. A method according to any preceding claim, wherein said metal or metal oxide powder is nickel oxide.

**Patentansprüche**

1. Verfahren zur Herstellung einer Anode für eine Brennstoffzelle aus Festelektrolyt, das die folgenden Schritte umfasst:

ein gemischter Schlamm einer metallorganischen Verbindung wird gebildet, die eines von, oder eine Kombination von Salz der Octylsäure, Salz der Naphthensäure, Salz der Neodecansäure, Salz der Ethylhexansäure, Salz der Propionsäure, Stearat, und ein Acetylacetonatkomplex eines zweiwertigen oder eines dreiwertigen Metalls und eines vierwertigen Metall, und eines Metalls oder Metalloxidpulvers ist,
der gemischte Schlamm wird auf die Oberfläche einer mittleren Festelektrolytenschicht der Brennstoffzelle aufgetragen,
der Schlamm wird getrocknet und thermisch so zersetzt, um ein vierwertiges Metalloxid zu bilden, das mit einem zweiwertigen oder dreiwertigen Metalloxid dotiert ist, und
die so hergestellte Anode wird geglüht, so daß Filme oder Teilchen des dotierten Metalloxids gleichförmig auf der Oberfläche von Körnern aus Metall oder Metalloxid und auf der Oberfläche der mittleren Festelektrolytenschicht verteilt sind.

2. Verfahren nach einem vorhergehenden Anspruch, in dem das vierwertige Metall Zirconium, und das zweiwertige oder dreiwertige Metall Yttrium ist.

3. Verfahren nach einem der Ansprüche 1 bis 2, in dem das vierwertige Metall Cerium, und das zweiwertige oder dreiwertige Metall Yttrium ist.

4. Verfahren nach einem der vorhergehenden Ansprüche, in dem die mittlere Festelektrolytenschicht mit Yttriumoxid stabilisiertes Zirconiumdioxid umfasst.

5. Verfahren nach einem der vorhergehenden Ansprüche, in dem dem gemischten Schlamm Festelektrolytenpulver zugegeben wird, bevor der gemischte Schlamm auf die Oberfläche der mittleren Festelektrolytenpulver aufgetragen wird.

6. Verfahren nach einem der vorhergehenden Ansprüche, in dem das Metall oder das Metalloxidpulver Nickeloxid ist.

**Revendications**

1. Mode de préparation d'une anode de cellule de combustible d'électrolyte solide comportant les phases suivantes:

préparation d'un coulis de composé organométallique sous forme de complexe comportant l'un ou l'autre ou une combinaison des sels d'acide octylique, d'acide naphthénique, d'acide néodécanoïque, éthyle hexanoïque, d'acide propionique, d'acide stéarique et de complexe acétyletonato de métal divalent ou trivalent et de métal tétravalent, et d'un métal ou de poudre d'oxyde métallique,
le revêtement avec le coulis de la surface de couche centrale solide d'électrolyte de ladite cellule de combustible,
le séchage et la décomposition thermique dudit coulis de façon telle à former un oxyde métallique tétravalent dopé avec un oxyde métallique divalent ou trivalent, et
le recuit de l'anode ainsi préparée de telle façon que les pellicules ou particules d'oxyde métallique dopé sont réparties de façon régulière en surface des grains métallique de métal ou d'oxyde métallique et en surface de ladite couche centrale solide d'électrolyte.

2. Méthode selon l'une des revendications précédentes, suivant laquelle le métal tétravalent est le zirconium et le métal divalent ou trivalent est l'yttrium.

3. Méthode selon l'une des revendications 1 à 2, suivant laquelle le métal tétravalent est le cérium et le métal divalent ou trivalent est l'yttrium.

4. Méthode selon l'une des revendications précédentes, suivant laquelle la couche centrale d'électrolyte solide comporte le zircone stabilisé à l'yttria.

5. Méthode selon l'une des revendications précédentes, suivant laquelle de la poudre d'électrolyte solide est ajoutée audit coulis mélangé avant le revêtement dudit coulis mélangé sur la surface de la couche centrale d'électrolyte solide.

6. Méthode selon l'une ou l'autre des revendications précédentes, suivant laquelle la poudre métallique ou d'oxyde métallique est l'oxyde de nickel.

# F I G. 1

20kU X10,000          1μm  011101

FIG. 2

20kU X3.5          5μm

FIG. 3

F I G. 4

VOLTAGE OF
SINGLE CELL(b)

— — ● — —

OUTPUT OF
SINGLE CELL(b)

— — ▲ — —

VOLTAGE OF
SINGLE CELL(a)

— — ○ — —

OUTPUT OF
SINGLE CELL(a)

— — △ — —

EP 0 519 681 B1